# EUROPEAN PATENT APPLICATION

(11) **EP 1 517 385 A2**
(43) Date of publication of application: **23.03.2005**
(21) Application number: 04255554.0
(22) Date of filing: 14.09.2004
(51) Int. Cl.: H01M 2/10, H01M 2/12

(54) **High performance rechargeable battery pack for toy vehicles**

(30) Priority: 16.09.2003 US 592969 P; 31.08.2004 US 929728
(71) Applicant: New Bright Industrial Co., Ltd., Kowloon, Hong Kong (CN)
(72) Inventor: Lee Keung, Hong Kong (JP)
(74) Representative: Smith, Norman Ian

(57) **Abstract**

A battery pack (50) and a battery compartment (22) for high performance, radio-controlled toy vehicles (10), such as high speed vehicles with highly sensitive steering and/or driving (known as "digital proportional") or other types of high performance toy vehicles/features requiring high voltage/high current. The battery pack (50) provides improved performance for the toy (10), an improved layout of the pack/battery arrangement, improved safety features, and improved piracy prevention.

## Description

### Related Application:

This application claims priority on U.S. Provisional Application No. 60/502,969 filed September 16, 2003 and entitled "High Performance Rechargeable Battery Pack For Toy Vehicles," the disclosure of which is incorporated herein in its entirety.

### Field of the Invention:

The instant invention relates to toy vehicles, such as remote control water and land vehicles, such as boats, cars, trucks, snowmobiles and the like. More particularly, this invention relates to an improved battery pack for high performance, radio-controlled toy vehicles, such as high speed vehicles with highly sensitive steering and/or driving (known as "digital proportional") or other types of high performance toy vehicles/features requiring high voltage/high current.

The improved battery pack of the instant invention has several advantages over prior art battery packs, such as improved performance for the toy, an improved layout of the pack/battery arrangement, improved safety features, and improved piracy prevention. The layout of the battery pack arrangement enables a large number of direct current rechargeable cells to be efficiently incorporated into the pack. The number of individual cells can vary depending on the specific current/voltage desired for the particular application in which the pack is to be used. For example, in one exemplary embodiment, sixteen individual cells are provided each generating 1.2 volts individually and 19.2 volts collectively. In this embodiment, the individual cells are arranged to two parallel, stacked rows of eight cells each. The increased power generated by this 19.2 volt pack enables increased performance for the toy vehicles, such as faster running speeds and/or the ability to climb up and over steeper obstacles. Thus, the invention enables mass-market toy vehicles to perform more like vehicles provided in the hobby trade.

The improved safety features in the battery pack include the incorporation of gas relief vents in a hard plastic case which houses the individual battery cells. The vents prevent air pressure from building within the case due to air expansion from heat generated by the pack during operation. Thus, the air pressure is dissipated through the vents so that the air pressure can remain equalized inside and outside the pack. The vents also enable any gas emissions that may be generated from a damaged or decaying battery cell to be dissipated from the pack in order to further improve the safety of the pack. Another safety feature is provided in the form of bulged and enlarged electrical contact terminals for the battery pack. These improved electrical contacts assure that a completely closed electric circuit is achieved when the battery pack is positioned in the battery compartment of a toy to prevent the possibility of the potentially dangerous electrical phenomenon known as "arcing."

The invention provides improved piracy prevention by incorporating a recess/chamfer design at one end of the pack together with several ridges located at designated positions on each side of the pack to ensure that only packs having this configuration will fit into the toy vehicle. This feature provides a proprietary battery pack for the toy vehicle and prevents other brands of battery packs from being used in the vehicle and/or in the recharging devices for the battery pack. The particular location of the recess/chamfer at the end of the pack is also used to distinguish between battery packs having different voltages. For example, the location of the recess/chamfer on the 19.2 volt embodiment described above would be different from the location of the recess/chamfer on a battery pack having a different voltage. The battery compartment in the toy itself includes structural features that cooperate with the recess/chamfer and side ridges on the pack in a manner that only enables the proper and proprietary pack to be installed in the toy.

### Background and Summary of the Invention:

Toy vehicles have proven to be very popular toys for children and adults of all ages. Many different types of toy vehicles have been provided in the past. For example, toy vehicles have been provided in the form of toy boats, toy cars, toy trucks, toy construction equipment, toy motorcycles, toy snowmobiles and the like. Toy manufacturers are constantly trying to find ways to improve the operation of toy vehicles so that they look and function in a manner that is as real as possible, while also keeping the cost of the toy as low as possible. Many toy vehicles are made as miniaturized replicas of real full-size vehicles. Many such toys also include battery-driven motors that enable the toy to be self-propelled, thereby providing greater realism and further enjoyment for the user. Toy manufacturers are constantly looking for ways to make the toys less expensive and more reliable, while still providing a fun, exciting and safe toy. Toy manufacturers are also trying to provide improved performance for the toys in order to further enhance enjoyment of the toy.

Unlike the traditional toy trade, the hobby trade has incorporated high performance features in its hobby quality radio-controlled vehicles, which are typically significantly more sophisticated and expensive as compared to the mass-marketed radio-controlled toy vehicles. Such high performance features include, for example, significantly higher speeds relative to the mass-market toy vehicles, as well as more sensitive steering, driving and/or other control features. These high performance features are often referred to as "digital proportional" control. Such high performance features require more powerful battery support as compared to the typical mass-market toy vehicles.

Conventionally, battery support for toy vehicles has been provided in the form of rechargeable battery packs containing a plurality of rechargeable cells put together in a vinyl tube packaging. The typical configuration of such battery packs is a single row of individual battery cells. 9.6 volt and 7.2 volt battery packs have been readily available in the market for use in such applications. The 7.2 volt packs are commonly used in the hobby trade for high performance toys.

The instant inventors have found that the conventional battery packs need improvements in order to enable mass-market toy vehicles to include high performance features found in the hobby trade. Thus, a need exists for an improved battery pack that is suitable for powering toys with high performance features, while still enabling the vehicle and the battery pack to be inexpensive, reliable and safe. The instant invention addresses this need by providing an improved battery pack particularly suited for use in toy vehicles with high performance features, such as a high performance radio-controlled snowmobile or the like. The battery pack of the invention incorporates an improved layout of the pack/battery arrangement, improved safety features, and improved piracy prevention.

The layout of the battery pack arrangement enables a large number of direct current rechargeable cells to be efficiently incorporated into the pack. The number of individual cells can vary depending on the specific current/voltage desired for the particular application in which the pack is to be used. The instant inventors have come up with an advantageous layout design/battery arrangement that takes into account several factors that enable the pack to be economically and advantageously used in a variety of mass market toy vehicles. For example, the cell layout makes optimal use of the limited space available in the pack. The cell layout also facilitates economical manufacturing of the battery pack. In addition, because the increased voltage provided by the pack will generate additional heat, it is necessary to effectively dissipate the heat in a reliable and efficient manner. This instant inventors have found that this can be best achieved by arranging the individual cells in a two layer parallel configuration with a pair of gas relief vents located at a center position on the opposite ends of the pack, respectively. This design allows optimal air convection/flow. In addition, by providing a double layer, parallel configuration of the individual battery cells, the inventors have found that the battery pack fits best in a variety of battery compartments for different radio-controlled vehicles having different vehicle sizes/dimensions. In one preferred embodiment, sixteen individual cells are provided each generating 1.2 volts individually and 19.2 volts collectively. In this embodiment, the individual cells are arranged to two parallel, stacked rows of eight cells each. The increased power generated by this 19.2 volt pack enables increased performance for the toy vehicles, such as faster speed running speeds and/or the ability to climb up and over steeper obstacles. Thus, the invention enables mass-market toy vehicles to perform more like vehicles provided in the hobby trade. The invention is not limited to the above-described 19.2 volt embodiment; rather any number of individual cells can be used in accordance with the instant invention depending on the particular application in which the invention is used. In other words, more than sixteen or less than sixteen individual cells can be used to provide the desired voltage/current for a specific toy vehicle, in addition to the other features of the invention described herein.

The improved safety features in the battery pack include the incorporation of gas relief vents in a hard plastic case which houses the individual battery cells. The vents are preferably formed by providing cut-out portions on each end of both a first and second outer casing portion used to house the battery cells, such that when the first and second casing portions are mated together the vents are defined in the casing. The vents prevent air pressure from building within the case due to air expansion from heat generated by the pack during operation. In other words, the air pressure is dissipated through the vents so that the air pressure can remain equalized inside and outside the pack. The vents also enable any gas emissions that may be generated from a damaged or decaying battery cell to be dissipated from the pack in order to further improve the safety of the battery pack.

Another safety feature is provided in the form of bulged and enlarged electrical contact terminals for the battery pack. The bulged and enlarged contact terminals are designed to contact corresponding terminals within the battery compartment of a vehicle in order to provide power from the battery pack to the electrical components of the toy vehicle, such as a motor and a radio frequency (RF) receiver. Unlike the conventional flat and smaller contact terminals provided on conventional battery packs, these improved electrical contacts assure that a completely closed electric circuit is achieved when the battery pack is positioned in the battery compartment of a toy to prevent the possibility of the potentially dangerous electrical phenomenon known as "arcing." This feature is advantageous in the battery pack of the instant invention due to the increased voltage provided thereby.

In addition, the invention provides improved piracy prevention by incorporating a recess/chamfer design at one end of the pack together with several ridges located at designated positions on each side of the pack to ensure that only packs having this configuration will fit into the toy vehicle. This feature provides a proprietary battery pack for the toy vehicle and prevents other brands of battery packs from being used in the vehicle and/or in the recharging devices for the battery packs. The particular location of the recess/chamfer at the end of the pack is also used to distinguish between battery packs having different voltages. For example, the location of the recess/chamfer on the 19.2 volt embodiment described above would be different from the location of the recess/chamfer on a battery pack having a different voltage (e.g., a battery pack having more or less than sixteen 1.2 volt individual cells). The battery compartment in the toy itself includes structural features, such as a lug and slots, that cooperate with the recess/chamfer and side ridges, respectively, on the pack in a manner that only enables the proper and proprietary pack to be installed in the toy.

### Brief Description of the Drawings:

These and other objects, features and advantages of the instant invention will become apparent from the following detailed description of the preferred embodiment when read in conjunction with the appended drawings, in which:

Figure 1 shows an exemplary toy vehicle of a type to which the instant invention is applicable;

Figure 2 shows an enlarged, partial view of the exemplary toy vehicle of Fig. 1, showing an exemplary embodiment of the battery compartment for receiving a battery pack constructed in accordance with the instant invention;

Figure 3 shows an enlarged, partial view of a locking device provided on the back portion of the battery compartment of Fig. 2 for use in locking a battery pack into the correct position within the battery compartment;

Figure 4 shows an enlarged, partial view of the front portion of the battery compartment of Fig. 2 illustrating some of the elements which cooperate with the battery pack to assure that only an authorized and proper voltage battery pack can be installed in the battery compartment;

Figure 5 shows a perspective view of an exemplary battery pack charger for use in charging a battery pack constructed in accordance with the instant invention;

Figure 6 shows an enlarged, partial view of the inside of the battery charger that illustrates some of the elements which cooperate with the battery pack to assure that only an authorized and proper voltage battery pack can be installed in the battery charger;

Figure 7 shows a front, perspective view of an exemplary embodiment of a battery pack constructed in accordance with the instant invention;

Figure 8 shows a top perspective view of the battery pack of Fig. 7 ready for insertion into the battery charger of Fig. 5;

Figure 9 shows a right side view of the battery pack of Fig. 7;

Figure 10 shows a sectional end view of the battery pack of Fig. 9;

Figure 11 shows a sectional side view of the battery pack of Fig. 7 that illustrates the layout of the individual battery cells within the battery pack;

Figure 12 shows a perspective view of one portion of the outer casing used to house the individual battery cells in the battery pack of Fig. 7;

Figure 13 shows a perspective view of the collection of battery cells used in the battery pack of Fig. 7; and

Figure 14 shows a perspective view of the collection of battery cells shown in Fig. 13 inserted into one portion of the outer casing shown in Fig. 12.

### Detailed Description of the Preferred Embodiments

The preferred embodiments of the instant invention will now be described with reference to the drawings. The embodiments described are only exemplary and are not meant to limit the scope of the invention beyond the express scope of the appended claims. In connection with the drawings, like reference numerals represent similar parts throughout the various views.

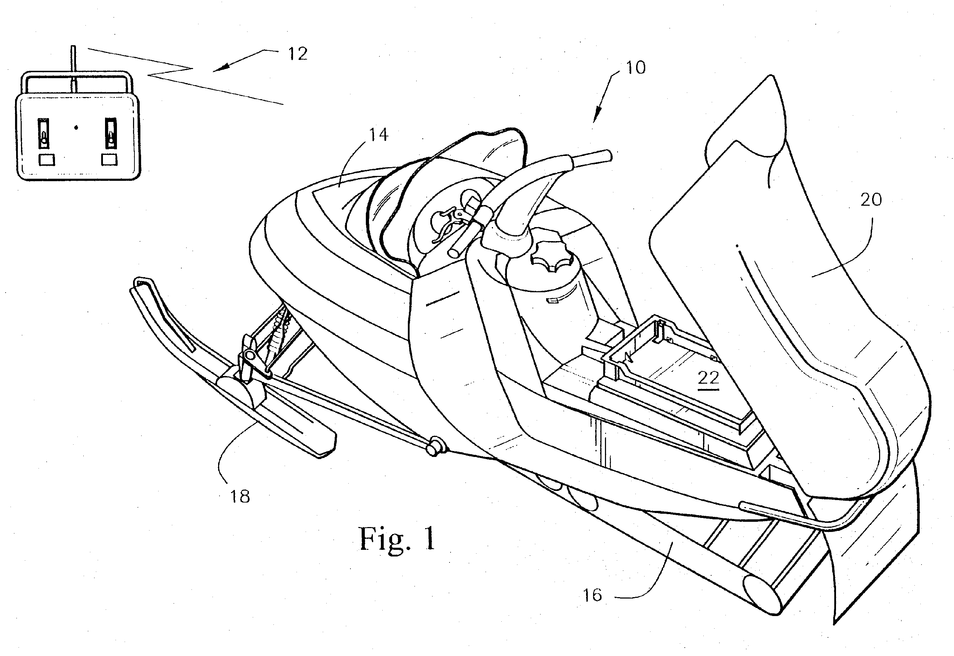

Fig. 1 shows an exemplary toy vehicle 10 in the form of a miniaturized snowmobile. However, the instant invention is applicable to any suitable remote control toy powered by a motor and requiring electric power. The toy vehicle is preferably provided with a remote control device, such as a radio frequency transmitter 12, for controlling the operation of the vehicle, which includes a suitable receiver for receiving the control signals sent by the transmitter. The toy vehicle 10 includes an outer housing 14 preferably made from a suitable plastic or other material that enables the toy vehicle to be very durable. The housing 14 may be comprised of, for example, upper and lower housing sections that are joined together, in a known manner, during assembly of the toy. A miniaturized motor (not shown) is contained within the toy's housing 14 for propelling the vehicle when the motor is energized. In this embodiment, the motor drives a belt 16 designed to grip snow in order to propel the toy over snow. Movable ski elements 18 are provided in the front of the toy for enabling steering control for the toy, thereby providing a fun and exciting toy that simulates a real working snowmobile. A battery compartment 22 is provided in the snowmobile housing 14 which is accessed by lifting the simulated seat section 20 of the snowmobile. The battery compartment 22 is designed to receive a battery pack constructed in accordance with the instant invention, as will be described in detail below.

The toy vehicle 10 may be remotely controlled by an operator using, for example, an appropriate wireless transmitter 12. In this embodiment, the toy vehicle 10 includes an antenna (not shown) for receiving control signals from the wireless transmitter 12. The wireless transmitter 12 is used in this embodiment to send, for example, forward, reverse, acceleration and turning commands to the toy vehicle during operation. Turning of the toy vehicle is achieved in a known manner by controlling the angle of ski elements 18. Alternatively, the toy vehicle may operate on its own once the motor is energized. For example, the vehicle could have a drive system that causes the vehicle to move in a preset direction. Alternatively, the ski elements 18 may be manually movable to a desired location by the user prior to energizing the toy watercraft 10 in a manner that manually preprograms a set direction for the toy.

The toy vehicle is preferably constructed and designed to simulate a real vehicle, such as a snowmobile, car, truck, boat, jet ski or other type of land or water vehicle, thereby providing a realistic but miniaturized toy vehicle. The overall design and construction of such toy vehicles, such as that shown in Fig. 1, are generally known to those skilled in the art of toy design and manufacture. Thus, no further specific details regarding the particular vehicle itself will be provided herein, so as not to obscure the description of the battery pack assembly of the instant invention with unnecessary details. The remaining description herein will focus on the battery pack itself and how it cooperates with the toy vehicle and a recharger device to enable high performance features in the toy vehicle.

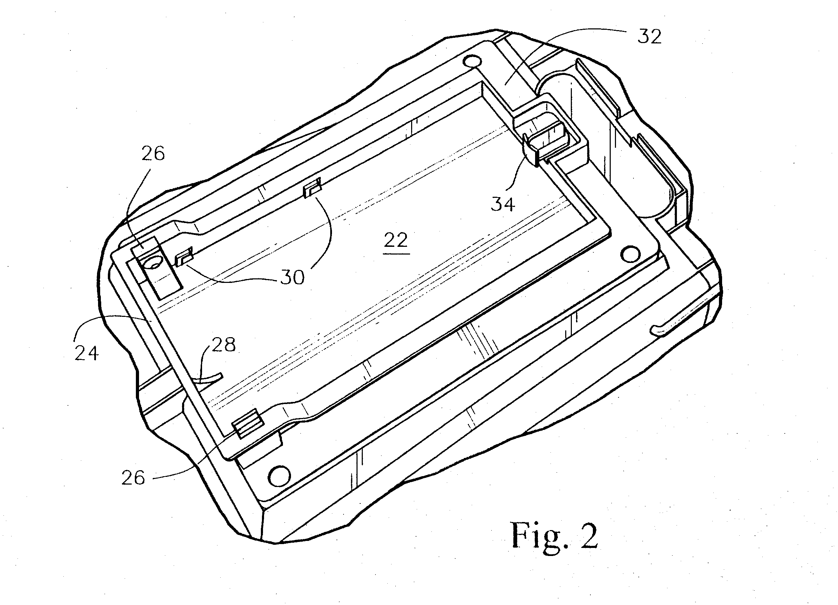

Fig. 2 shows an enlarged, partial view of the battery compartment 22 in the toy vehicle 10. The battery compartment 22 is specifically designed to receive a high voltage/high current rechargeable battery pack constructed in accordance with the instant invention for enabling high performance features to be incorporated into the toy vehicle. More particularly, as shown in Fig. 2, the battery compartment 22 includes a forward end 24 and a rear end 32, as well as contact terminals 26, a lug 28, slots 30 and a locking device 34. A battery pack constructed in accordance with the invention is designed to be placed in the compartment 22 toward the rear end 32 and slid forward into its operating position where the battery pack makes electric contact with the terminals 26. The locking device is used to force the battery pack against the forward end 24 of the battery compartment by rotation of the locking device 34. The lug 28 and slots 30 in the battery compartment 22 cooperate with structural features on the battery pack, as explained below, to enable a proper battery pack to be installed in the battery compartment 22, while at the same time preventing unauthorized battery packs from being installed in the compartment 22.

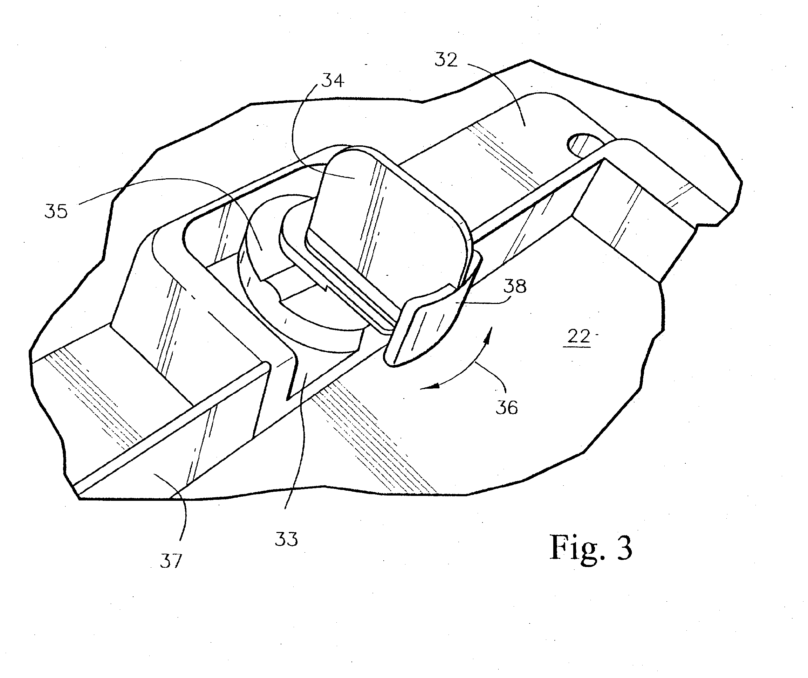

Figure 3 shows an enlarged, partial view of the rear end 32 of the battery compartment 22 in the vehicle 10. As indicated above, the locking device 34 is pivotally connected to a base portion 38 in the battery compartment. The locking device 34 includes a forward face portion 38 that has a curved configuration designed to force the battery forward when rotated, as indicated by arc 36, from an unlocked position to the locked position shown in Fig. 3. In the unlocked position (not shown) the forward face 38 of the locking device is positioned in space 33, so that it is out of the interior of the battery compartment and does not interfere with the insertion of a battery pack into the battery compartment. This enables the battery pack to be inserted into the battery compartment such that a rear edge of the battery pack is adjacent the rear wall 37 of the rear end 32 of the battery compartment 22. Once in this rearward position, the locking device 34 can be used to force the battery pack forward towards the forward end of the battery compartment and into electrical contact with the terminals 26.

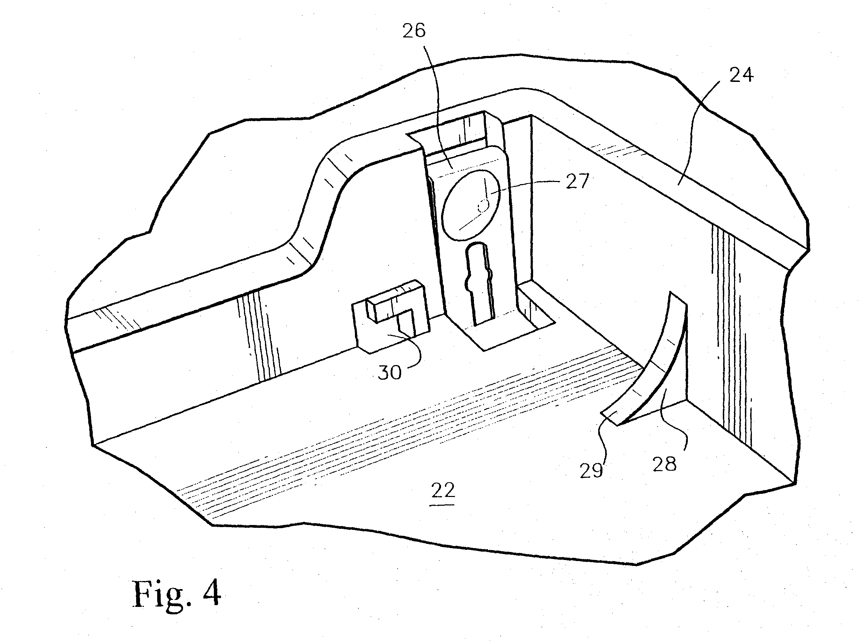

As will be explained in detail below, the battery pack includes a recess/chamfer in the forward end thereof which receives the lug 28 so as not to prevent the lug from stopping the battery pack from sliding forward into contact with the terminals 26. In addition, the sides of the battery pack includes ridges shaped to slide into slots 30 on each side of the battery compartment so that the slots allow the battery pack to slide into contact position. Thus, the specific size and location of the lug 28 and the slots 30 prevent battery packs not having corresponding structural features from being used in the battery compartment. This feature helps to assure that only proprietary and/or authorized battery packs are used in the toy vehicle. The specific position of the lug 28 along the end wall of the forward end 24 of the battery compartment 22 also dictates what specific voltage the battery pack must have to be inserted into the battery compartment. In other words, the lug 28 will prevent battery packs not having a recess/chamfer at a position that corresponds to the position of the lug 28 from being operably inserted into the battery compartment. Thus, this feature enables toy manufacturers to provide different voltage battery packs for different toys while also assuring that only the proper voltage battery pack can be inserted in a toy. Figure 4 shows an enlarged, partial view of the forward end 24 of the battery compartment 22 illustrating in closer detail the shape of the lug 28 and one of the slots 30, as well as the contact terminal 26. As seen in Fig. 4, the lug 28 protrudes into the battery compartment and has a curved face 29 adapted to be received into the recess/chamfer on the front of the battery pack. The slots 30 are each preferably in the form of an inverted "L" shape, thereby defining a rearwardly facing slot for receiving a corresponding structural feature (e.g., ridges) on the battery pack. Thus, the lug and slots in the battery compartment cooperate with the recess/chamfer and the ridges on the battery pack, such that the battery pack can be slid forward in the battery compartment to a position wherein the contacts on the battery pack connect with the contact terminals 26, having bulged contact portions 27, of the battery compartment.

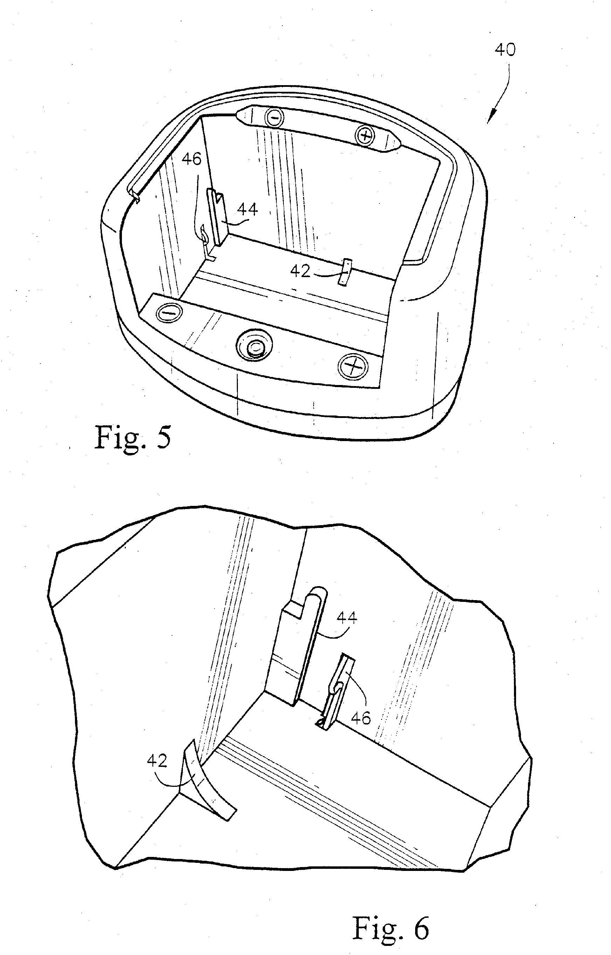

In addition to fitting in the battery compartment 22, the battery pack of the invention is designed to be rechargeable and, therefore, to fit into a battery pack recharger. Figure 5 shows an exemplary battery recharger device 40 having similar structural features as the battery compartment 22, so that the battery pack can be inserted into the battery charger 40 in a manner that is similar to the above-described manner in which the battery pack is inserted into the battery compartment. More particularly, as more clearly seen in Fig. 6, the inside of the battery charger includes a lug 42 and slots 44 which cooperate with the recess/chamfer and ridges on the battery pack to enable the battery pack to be inserted into the battery charger such that the battery pack terminal contacts the recharger terminal 46. The battery charger is, of course, connected to a power supply, such as a wall outlet, to enable the charger to recharge the battery pack for repeated use in the toy vehicle.

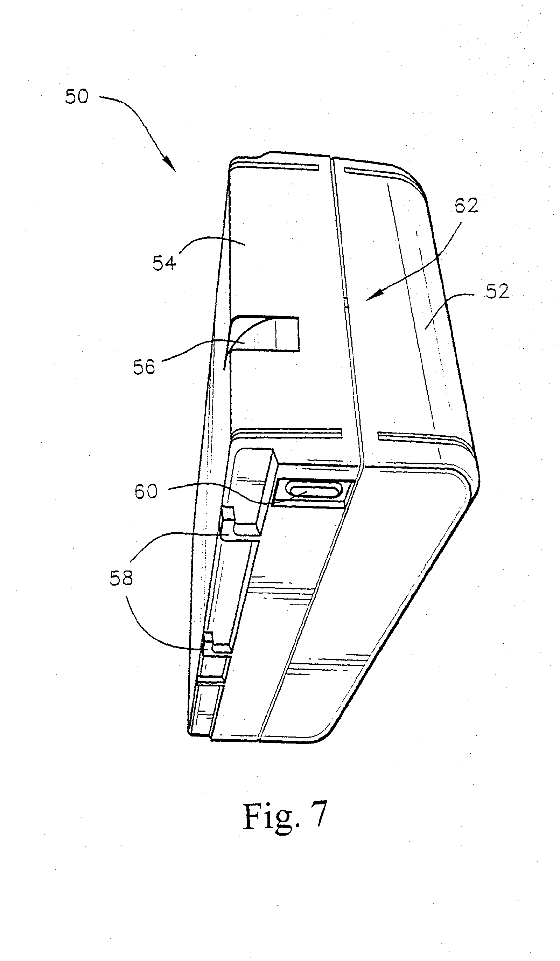

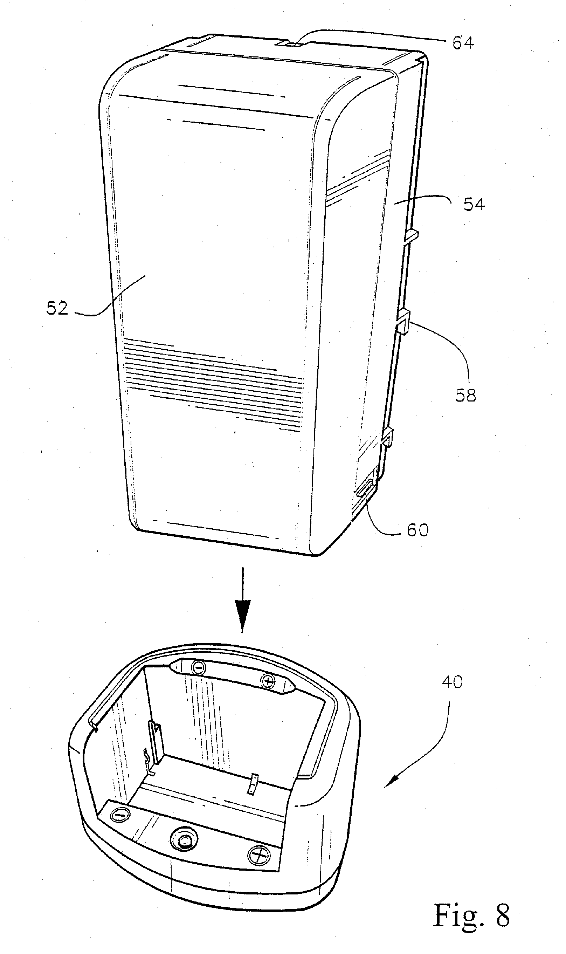

Figure 7 shows a front, perspective view of a battery pack 50 constructed in accordance with the preferred embodiment of the instant invention and designed to be inserted into the above-described toy vehicle battery compartment 22 and the battery charger 40. As seen in Fig. 7, the battery pack 50 includes a first portion 52 and a second portion 54 which mate together to form an outer casing for the battery pack 50. The first and second portions 52 and 54 are preferable constructed of a hard plastic material. The forward end of the battery pack 50 includes a recess/chamfer 56 that cooperates with the lug in the battery compartment 22 and the battery charger 40 to enable the battery pack to be operably inserted into these devices. The sides of the battery pack include ridges 58, preferably in the form of reverse "L" shapes, that have portions that respectively slide into the slots 30 in the battery compartment and slots 44 in the recharger. Figure 8 shows the battery pack being inserted into the battery charger 40. The particular location of the recess/chamfer 56 along the forward edge of the battery pack is used to designate the particular voltage of the battery pack and to assure that the battery pack can only be inserted into a toy having the designated lug position for that voltage.

The battery pack includes gas relief vents 62 in the hard plastic case which houses the individual battery cells. The vents 62 are preferably located at the center of each end of the battery pack, one of which is shown in Figure 7. The vents are preferably formed by providing cut-out portions on each end of both the first and second outer casing portions 52 and 54 used to house the battery cells, such that when the first and second casing portions are mated together the vents are defined in each end of the casing. The vents prevent air pressure from building within the case due to air expansion from heat generated by the battery pack during operation. In other words, the air pressure is dissipated through the vents 62 so that the air pressure can remain equalized inside and outside the pack 50. The vents 62 also enable any gas emissions that may be generated from a damaged or decaying battery cell to be dissipated from the pack. Figure 7 also shows another safety feature provided in the form of bulged and enlarged electrical contact terminals 60 for the battery pack 50. The bulged and enlarged contact terminals 60 are designed to contact the corresponding terminals 26 within the battery compartment 22 of the vehicle 10 in order to provide power from the battery pack to the electrical components of the toy vehicle, such as a motor and a radio frequency (RF) receiver. Unlike the conventional flat and smaller point contact terminals provided on conventional battery packs, these improved electrical contacts 60 assure that a completely closed electric circuit is achieved when the battery pack 50 is positioned in the battery compartment 22. By making the contacts 60 larger and bulged outwardly, more positive and reliable contact is made between the battery pack and the device in which it is installed. This feature is advantageous in the battery pack 50 of the instant invention due to the increased voltage provided thereby.

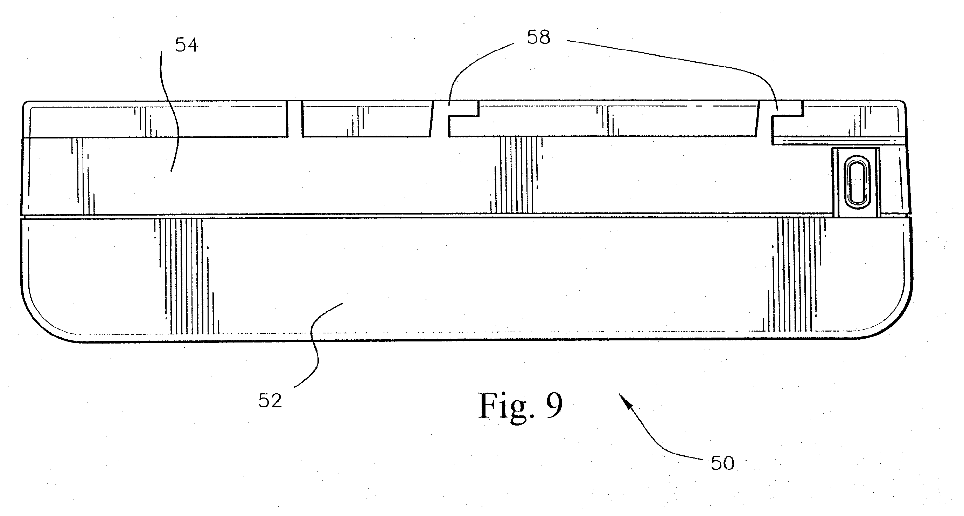

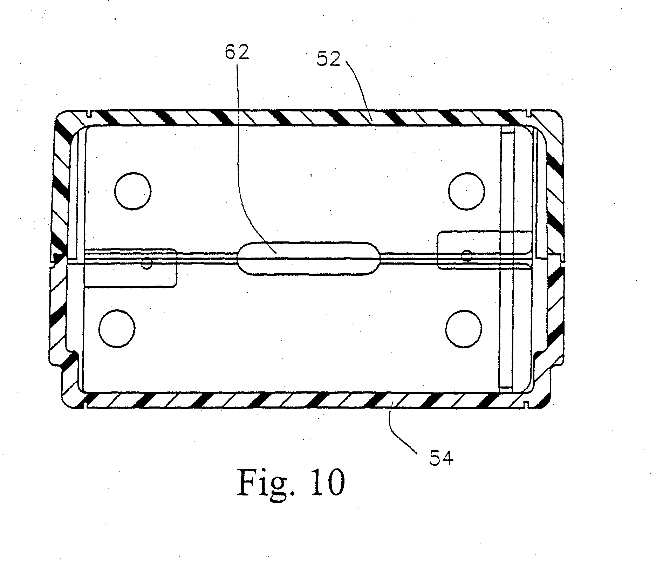

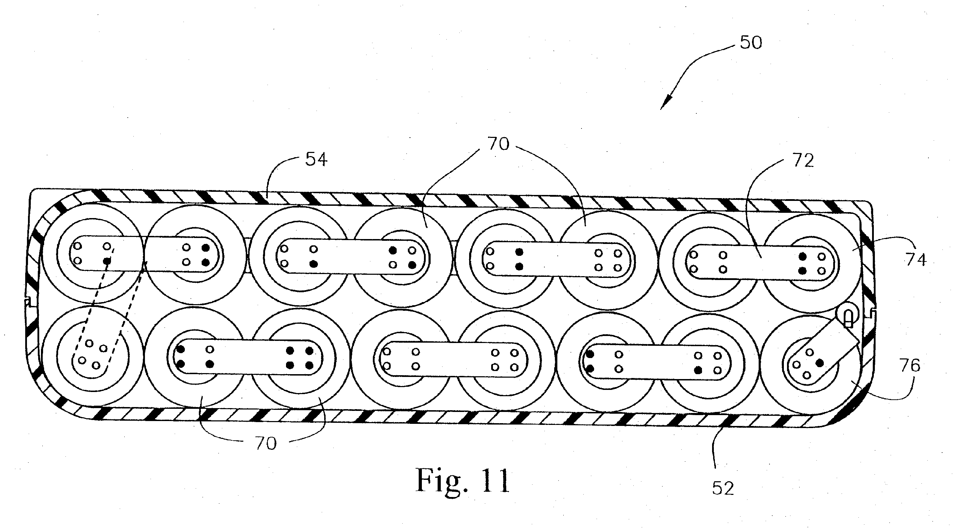

Figure 9 shows a side view of the battery pack 50 of Figure 7 which further illustrates the first casing portion 52, second casing portion 54, ridges 58 and improved contact terminal 60. Figure 10 shows a sectional end view of the battery pack 50, which again shows the first and second casing portions 52 and 54, as well as the gas relief vent 62. Figure 11 shows a side sectional view of the battery pack 50 having two parallel rows (74 and 76) of eight individual battery cells 70 all interconnected to via connectors 72 so as to define a single power source through the terminals 60 of the pack. In this embodiment, there are sixteen cells, but any suitable number of cells in each row can be used. For example, each row could have more or less than eight cells, but the number of cells in each row preferably correspond to each other. In this embodiment, each of the cells is a 1.2 volt cell, thereby defining a 19.2 volt battery pack. This battery pack has been found to be particularly suitable for providing high performance features in mass market toy vehicles. The voltage of each cell can also vary depending on the particular application in which the invention is used.

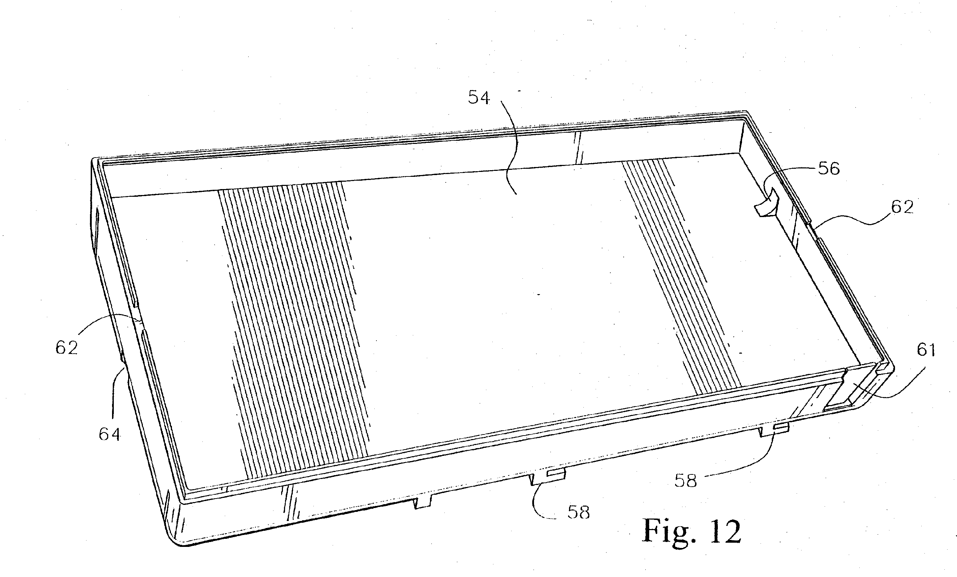

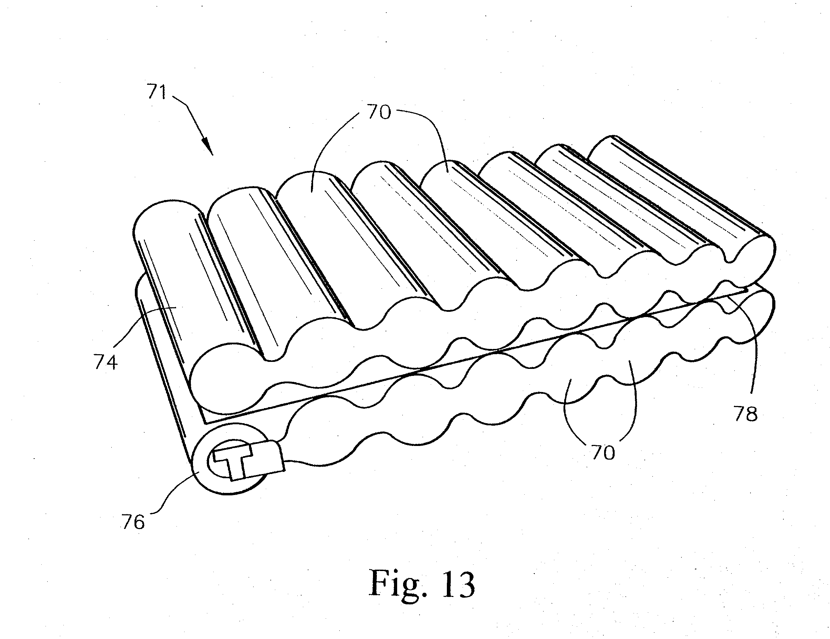

Figure 12 shows the second portion 54 of the outer casing of the battery pack 50. As seen in Fig 12, each end wall includes a cut-out portion 62 to define part of the gas relief vents 62 in the battery pack. In addition, the rear end of the casing 54 includes an indented portion 64 that cooperates with the locking device 34 to hold the battery pack in place in the toy's battery compartment 22. More specifically, the curved forward face 38 of the locking device snaps into the indent 64 in the second casing 54 when rotated to the locked position shown in Figure 3. Figure 12 also shows the location 61 where the contact terminal 60 is installed. As seen in Fig. 12, the recess/chamfer 56, the ridges 58, the indent 64, and the cut-outs 62 for the gas relief vent are all integrally formed into the second casing portion 54. The first casing portion 52 is constructed in a similar fashion to second casing portion 54, except without the lug, indent and ridges (see, e.g., Fig. 7). The first casing portion 52 includes cut-out portions corresponding to elements 62 of Fig. 12, so that the gas relief vents 62 are formed in each end of the battery pack when the first and second casing portions 52 and 54 are mated together. The instant inventors have found that locating the vents 62 in the location shown is advantageous when used with the specific battery cell layout discussed above to enable good air convection/flow. A spacer sheet (see element 78 in Fig. 13), such as a plastic sheet, can optionally be placed between the two battery layers 74 and 76 to further improve the structure of the battery arrangement.

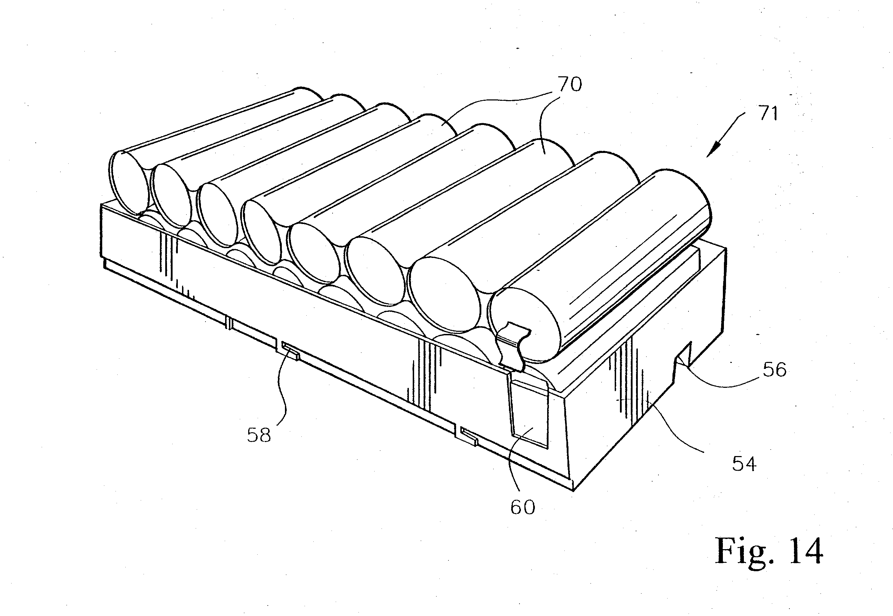

Figure 13 shows the battery arrangement 71 used in the battery pack embodiment of Fig. 7. As seen in Fig. 13, the battery arrangement 71 includes two rows 74 and 76 of individual battery cells 70, with a spacer sheet 78 therebetween. Each of the rows of batteries are preferably encased in a vinyl covering after the individual cells are electrically connected together. The battery arrangement is then ready to be inserted into the second casing portion 54, as shown in Fig. 14. Once the battery arrangement 71 is placed into the second casing portion 54, the first casing portion 52 is mated together with and secured to the second casing portion to complete the formation of the battery pack 50. The battery pack 50 is then ready to be installed in the battery compartment 22 of the toy vehicle 10 or the battery charger 40.
As can be seen from the above description, the instant invention provides an improved battery pack for high performance, radio-controlled toy vehicles, such as high speed vehicles with highly sensitive steering and/or driving (known as "digital proportional") or other types of high performance toy vehicles/features requiring high voltage/high current.

The improved battery pack of the instant invention has several advantages over prior art battery packs, such as improved performance for the toy, an improved layout of the pack/battery arrangement, improved safety features, and improved piracy prevention. The layout of the battery pack arrangement enables a large number of direct current rechargeable cells to be efficiently incorporated into the pack. The number of individual cells can vary depending on the specific current/voltage desired for the particular application in which the pack is to be used. The increased power generated by the battery pack enables increased performance for the toy vehicles, such as faster speed running speeds and/or the ability to climb up and over steeper obstacles. Thus, the invention enables mass-market toy vehicles to perform more like vehicles provided in the hobby trade, thereby further improving the realism and enjoyment of the toy vehicle.

While the preferred forms and embodiment of the instant invention have been illustrated and described herein, it will be appreciated by those skilled in the art that various changes and/or modifications can be made to the invention. Thus, the description herein is only exemplary and is not meant to limit the invention beyond express language and scope of the appended claims.

## Claims

1. An improved battery pack for high voltage/high current toy vehicles having high performance features, said battery pack comprising:
a first row of a plurality of individual battery cells;
a second row of a plurality of individual battery cells;
wherein said first row and said second row are configured in a stack parallel relationship such that said first row is on top of said second row and each of said battery cells are electrically interconnected to define a single direct current power source with a defined voltage equal to the combined total of the voltages of the individual battery cells in both the first and second rows;
said battery pack further comprising rigid casing having an upper outer casing portion and a lower outer casing portion that mate together to form in internal space within said casing that houses said power source, wherein said upper and lower outer casing portions include complimentary cut-out portions in their respective end portions such that they define gas relief vents at each end of the rigid casing, wherein said gas relief vents prevent pressure from building within said battery casing as a result of heat from the power source and allows gas emissions from a damaged or decaying battery cell to be dissipated from the casing; and
further wherein said lower outer casing includes a recess in a forward end thereof, the location of said recess on said forward edge corresponding to a value of the defined voltage and enabling said battery pack to be inserted into a battery compartment of a toy vehicle that is designed to operate with said defined voltage; and
further wherein said battery pack includes a pair of electrical contact terminals for facilitating an electrical connection with electronics on the toy vehicle, thereby providing a power source for operation of the toy vehicle when said battery pack is installed therein.

2. An improved battery pack for high current/high voltage toy vehicles as in claim 1, wherein said first row of individual battery cells includes eight battery cells.

3. An improved battery pack for high current/high voltage toy vehicles as defined in claim 2, wherein said second row of individual battery cells includes eight battery cells.

4. An improved battery pack for high current/high voltage toy vehicles as defined in claim 3, wherein each of said individual battery cells in both said first row and said second row have a voltage of 1.2 volts, thereby defining a 19.2 volt power source.

5. An improved battery pack for high current/high voltage toy vehicles as defined in claim 1, wherein each of said first row of individual battery cells and said second row of individual battery cells are encased in a protective covering.

6. An improved battery pack for high current/high voltage toy vehicles as defined in claim 5, wherein said protective covering is a vinyl covering.

7. An improved battery pack for high current/high voltage toy vehicles as defined in claim 5, wherein a spacer sheet is provided between said first row and second row of individual battery cells.

8. An improved battery pack for high current/high voltage toy vehicles as defined in claim 7, wherein said spacer sheet is a plastic sheet that separates said first row and said second row of individual battery cells.

9. An improved battery pack for high current/high voltage toy vehicles as defined in claim 1, wherein said electrical contact terminals are enlarged relative to conventional contact terminals on batteries for toy vehicle and are bulged outwardly from said battery pack to ensure a completely closed electrical circuit is achieved between said power source and the electronics in said toy vehicle when said battery pack is installed in said toy vehicle.

10. An improved battery pack for high current/high voltage toy vehicles as defined in claim 1, wherein the lower outer casing portion includes an indented portion in the rear end thereof that is operable to receive a locking device in a battery compartment of the toy vehicle when said battery pack is installed in said toy vehicle and said locking device is rotated to a locking position.

11. An improved battery pack for high current/high voltage toy vehicles as defined in claim 1, wherein said rigid casing is a hard plastic case.

12. An improved battery pack for high current/high voltage toy vehicles as defined in claim 3, wherein said lower outer casing portion includes ridges on each side thereof, wherein said ridges define a proprietary battery pack that enables a toy vehicle with a battery compartment having slots corresponding to said ridges to only receive a battery pack having said ridges.

13. An improved battery pack for high current/high voltage toy vehicles as defined in claim 12, wherein said ridges are L-shaped ridges.

14. An improved battery pack for high current/high voltage toy vehicles as defined in claim 12, wherein a spaced pair of said ridges are provided on each side of said lower outer casing portion.

15. An improved battery compartment and battery pack for high voltage/high current toy vehicles having high performance features,
said battery compartment comprising a compartment in said toy vehicle designed to receive a battery pack, said compartment including a rotatable locking device at a rear end of the compartment and a lug at the forward end of the compartment that extends into the interior space of the compartment, said lug being located at a position that corresponds to a defined voltage of a battery pack that said compartment is designed to receive, and further wherein said compartment includes slots on the sides thereof that are operable to only allow a battery pack having ridges corresponding to said slots to be installed in said compartment, and further wherein said locking device is operable to push the battery pack forward in the battery compartment when rotated to a forward position within said compartment, said forward movement causing the ridges on said battery pack to slide into said slots on the sides of said compartment, said compartment further including electrical contacts; and
a battery pack according to any preceding claim.
